# EUROPEAN PATENT SPECIFICATION

(11) **EP 2 956 503 B1**
(45) Date of publication and mention of the grant of the patent: **15.05.2019**
(21) Application number: 14705494.4
(22) Date of filing: 17.02.2014
(51) Int. Cl.: C08K 3/36, C08K 3/34, C08K 3/26

(54) **COMPOSITION FOR INJECTION STRETCH BLOW-MOULDING**
ZUSAMMENSETZUNG ZUR SPRITZSTRECKBLASFORMUNG
COMPOSITION POUR MOULAGE PAR SOUFFLAGE ET ÉTIRAGE

(30) Priority: 18.02.2013 EP 13155650
(43) Date of publication of application: 23.12.2015
(73) Proprietor: Ineos Europe AG, 1180 Rolle (Vaud) (CH)
(72) Inventor: LIBOTTE, Annick, 1400 Nivelles (BE)
(74) Representative: Smith, Julian Philip Howard
(86) International application number: PCT/EP2014/053010
(87) International publication number: WO 2014/125105

(56) References cited:
- WO-A1-2011/092306
- US-A- 4 767 799
- US-A1- 2004 180 159
- US-A1- 2011 115 135
- US-A1- 2011 217 500
- US-A1- 2012 282 422
- DATABASE WPI Week 200026 Thomson Scientific, London, GB; AN 2000-298566 XP002698713, & JP 2000 086722 A (ASAHI KASEI KOGYO KK) 28 March 2000 (2000-03-28)
- DATABASE WPI Week 200026 Thomson Scientific, London, GB; AN 2000-298637 XP002698714, & JP 2000 086833 A (ASAHI KASEI KOGYO KK) 28 March 2000 (2000-03-28)

## Description

The present invention relates to the production of polyethylene containers by injection stretch blow-moulding processes, and to the containers and intermediate articles produced in such processes.

A large number of plastic bottles and similar plastic containers used nowadays are produced by the stretch blow-moulding process. In a typical process, a so-called preform, which is of an elongated tubular form with one closed end, is first formed from the polyethylene, usually by injection moulding. In the stretch blow-moulding process the preform is heated, inserted into a mould cavity, and then inflated by injecting gas under pressure. At this point the preform is additionally stretched in the axial direction with a stretching mandrel which has been inserted through the neck opening. After the stretching/blow-moulding process the finished plastic bottle is removed from the blow mould.

The single-layer or multi-layer preform is produced before the stretch blow-molding process in a separate injection moulding or plastic flow moulding step. This step may be performed immediately before the stretch blow-moulding step (one-stage process). However often the preforms are produced separately in space and time from the stretch blow-moulding process and are stored for later use (two-step process). In this case it is necessary to heat the preforms again in order to permit stretching and blow-moulding: the preform is usually brought to the specified temperature by infrared radiation.

In the two-step process the injection moulding and stretch blow-moulding steps can be performed separately and optimally, and for this reason the two-step process is generally preferred for larger production volumes.

In addition to the plastic material, the composition from which the container is made can contain certain additives such as fillers, opacifying agents and pigments.

Whilst containers in a stretch blow-moulding process are usually formed mainly from polyethylene terephthalate, the present invention is concerned specifically with containers made from polyethylene.

Examples of containers to which the present invention is applicable include white containers such as bottles often used for milk. These usually contain titanium dioxide as the white pigment. Zinc oxide, barium sulphate, lithopone and zinc sulphide may also be used. If made from polyethylene, such bottles are usually made using an extrusion blow moulding process, in which the polyethylene is extruded directly into the mould for blow-moulding, and therefore does not require reheating. However it can be advantageous to make such bottles using a stretch blow-moulding process, as this requires less energy, is easier to operate and generally results in lighter bottles with the possibility to obtain an improved neck design.

US 2011115135 discloses compositions suitable for use in a stretch blow-moulding process comprising at least 60% of a monomodal or multimodal polyethylene having a density of 941-965 kg/m³ and with a melt index MI₂ of 0.1 - 0.9 g/10min, optionally containing up to 10% or even up to 40% of a filler such as calcium carbonate or talc, and also optionally up to 4% of a pigment such as titanium dioxide or zinc oxide. The patent contains no examples, and the filler is added in order to reduce the amount of polyethylene used for economic reasons. There is no mention of any other benefits from the incorporation of the filler and there is no indication that polyethylene bottles containing the specified amounts of filler and/or pigment have been made successfully. One disadvantage of adding large amounts of filler to polyethylene is that the polyethylene becomes stiffer, which results in a reduction in impact resistance.

We have found that a significant difficulty with making pigmented, particularly white, polyethylene containers in a stretch blow-moulding process, particularly a two-step process, is that certain pigments and opacifying agents such as titanium dioxide and zinc oxide block infra-red radiation, meaning that it is very difficult to heat the preform sufficiently or to the required degree of uniformity prior to the stretch blow-moulding step. Insufficient or uneven preform heating can result in bottle breakage or uneven wall thickness distribution during the stretch blow moulding step. Such a problem is avoided in the extrusion blow moulding process because no such heating is required. There is no indication that this problem has been addressed or even recognised in US 2011115135, since there is no evidence that containers containing significant amounts of pigment were actually made.

WO 2012/055742 discloses the use of Cu, Fe, Ca or Sn salts such as phosphites and phosphates heat absorbers in preforms used for stretch blow-moulding, in order to counteract the poor heat conductivity of polyethylene. The maximum amount of heat absorber used is 1000ppm (0.1wt%). Fe and Cu salts would be unsuitable for use in white containers as they are coloured. Other salts, even if not coloured, would be likely to give insufficient opacity at such low levels in order to be suitable as an opacifier as well as a heat absorber.

Therefore there is a need for a polyethylene composition which is capable of being used to make non-transparent containers by the stretch-blow moulding process, which has both good heat transfer during the stretch-blow moulding process, as well as satisfactory opacity. We have found that such a composition can be obtained by using as pigment or opacifying agent certain compounds which do not block or reflect infra-red radiation and which can be used at sufficiently high levels to give good opacity where desired.

Accordingly in a first aspect the present invention consists of the use of SiO₂, CaCO₃ or aluminium silicate as a pigment or opacifying agent in a stretch blow-moulded article or preform for making such an article, which article is formed from a composition comprising a polyethylene having a natural density of 948-963 kg/m³ and a melt index MI₂ of 0.2 - 5 g/10min.

By "opacifying agent" is meant any material whose presence reduces visible light transmission through polyethylene when admixed with it. Typically the opacifying agent is a filler or a pigment. The degree of reflectivity of the opacifying agent is determined by first making a 400µm thickness pressed film of Eltex® B4020, a monomodal polyethylene having a density of 952 kg/m³ and a melt index MI₂ of 1.9 g/10min, containing 2wt% of the opacifying agent, and then recording the diffuse reflectance spectrum of the film. For the purposes of this invention, the degree of reflectivity of the opacifying agent is defined as being the reflectivity to 900nm wavelength infra-red radiation of the above defined film containing 2wt% of the opacifying agent; an opacifying agent which reflects less than 50% of such radiation is defined as "non-reflective".

The films are prepared using a Weber PW20 two plates press (max pressure 90 bars) equipped with a water cooling system. A preform (two overlaid aluminium foils of 200µm thickness with a hole of 300mm diameter) is placed on an aluminium foil of 100µm thickness. A few pellets are poured into the preform and covered with a second aluminium foil of 100µm thickness. The whole system is placed between the two plates of the press at 180°C (30s contact time - 30s pressure time). Then the press is gradually cooled and opens at around 40°C. The diffuse reflectance spectrum of the film is then measured using a Shimadzu spectrometer (Model UV-3100) equipped with an integrating-sphere. This equipment includes two light sources: halogen and deuterium lamps. The background is recorded on a BaSO₄ plate. The spectra are recorded between 800 and 1500nm with a 20nm slit width and a 0.5nm sampling interval. The reflection at the desired wavelength, eg 900nm, can then be measured.

Although some materials which fulfill the above definition of a non-reflective opacifying agent are known to be used as fillers with certain plastics, there is no suggestion in the prior art that they can effectively be used as opacifiers or pigments, or to improve the processability of the polyethylene preforms in the amounts specified in the present invention. Their use in this manner allows the manufacture of articles by the stretch-blow moulding process with the use of less energy and over a wider processing window, as well as the manufacture of non-transparent articles by this process without the need to use pigments which block infra-red radiation.

We have found that when non-reflective opacifying agents such as SiO₂, CaCO₃ or aluminium silicate are used in place of or in association with only a very small amount of TiO₂ or other infra-red blocking opacifying agent, the problems of infra-red blocking can be eliminated, or reduced if a small amount of TiO₂ is present, whilst still obtaining blow-moulded articles having a suitable level of opacity. Furthermore, it has been found that use of some of these non-reflective opacifying agents can improve heat transfer through the polyethylene, thereby permitting the level of infra-red heating to be reduced compared with known processes, which may provide significant energy savings.

The non-reflective opacifying agent may be present in an amount of 0.3 - 30wt%, preferably 0.3-25wt% and more preferably 0.3-15wt%. Lower levels are also possible, such as 0.3-10wt% and even 0.3-7wt%.

A further aspect of the present invention is the use of SiO₂, CaCO₃ or aluminium silicate to increase the heat transfer through a preform heated by infra-red radiation, said preform being formed from a composition comprising a polyethylene having a natural density of 948-963 kg/m³ and a melt index MI₂ of 0.2-5 g/10min. Preferably this use increases the temperature of the inner surface of a preform heated by infra-red radiation compared with an otherwise identical preform in which the non-reflective opacifying agents are absent when heated under the same conditions.

In this further aspect of the invention, the non-reflective opacifying agent may be present in an amount of 0.3 - 30wt%, preferably 0.3-25wt% and more preferably 0.3-15wt%. Lower levels are also possible, such as 0.3-10wt% and even 0.3-7wt%.

The present invention may be utilised in a process for making an article, preferably a container comprising the steps of
- injecting a composition comprising a polyethylene having a natural density of 948-963 kg/m³ and a melt index MI₂ of 0.2-5 g/10min, and 0.3-7 wt% of a non-reflective opacifying agent, defined as being a compound which when present at a level of 2wt% in a 400µm thick pressed film of a monomodal polyethylene having a density of 952 kg/m³ and a melt index MI₂ of 1.9 g/10min causes the film to reflect less than 50% of infra-red radiation having a wavelength of 900nm, to form a preform;
- heating the preform;
- subjecting the heated preform to a stretch blow moulding step,
- characterised in that the temperature measured on the inside surface of the preform subsequent to the heating step and before the blow-moulding step is higher than that of an otherwise identical preform in which non-reflective opacifying agent is absent when heated under identical conditions.

In the above process it is preferred that the temperature measured on the inside surface of the preform subsequent to the heating step and before the blow-moulding step is at least 0.2°C higher than that of an otherwise identical preform in which non-reflective opacifying agent is absent when heated under identical conditions.

All features below are applicable to both of the above aspects of the invention.

The SiO₂, CaCO₃ or aluminium silicate cause a 400µm thick pressed film of Eltex® B4020 to reflect less than 40%, and more preferably less than 30%, of infra-red radiation at a wavelength of 900nm when present at a level of 2wt%. They also cause a 400µm thick pressed film of Eltex® B4020 to reflect less than 50%, preferably less than 40%, more preferably less than 30% and particularly preferably less than 20%, of infra-red radiation at all wavelengths of between 800 and 1000nm when present at a level of 2wt%. The SiO₂, CaCO₃ and also aluminium silicate may be porous or non-porous. These may be used singly or in combination, in which case the level refers to the total amount of all non-reflective opacifying agents present.

The preferred amount of SiO₂, CaCO₃ or aluminium silicate in the composition is at least 1wt%. The most preferred ranges are 1-5wt% and particularly 1-3wt%.

It is preferred that the total amount of any titanium dioxide, zinc oxide, barium sulphate, lithopone or zinc sulphide in the composition, if present, is 1wt% or less, more preferably 0.7wt% or less. Optionally the composition may be substantially free of any titanium dioxide, zinc oxide, barium sulphate, lithopone or zinc sulphide.

The melt index MI₂ of the polyethylene is preferably 0.3 - 3 g/10min, and more preferably 0.7 - 2 g/10min.

The natural density of the polyethylene is preferably between 950 and 961 kg/m³, more preferably between 951 and 960 kg/m³.

The article or preform is preferably formed from a single layer of the polyethylene defined above.

The polyethylene may be monomodal or multimodal.

The multimodal polyethylene preferably comprises from 40 to 60 wt% of an ethylene polymer (A) having a density of at least 965 kg/m³, and from 60 to 40 wt% of an ethylene polymer (B) having a density of 910 to 950 kg/m³.

The multimodal polyethylene composition may optionally further comprise a small prepolymerisation fraction in an amount of 10 wt% or less based on total polyethylene. Alternatively or additionally it may further comprise a fraction of very high molecular weight polymer, having a higher molecular weight than the aforementioned high molecular weight polymer, in an amount of 10 wt% or less based on total polyethylene.

It is generally preferred that the ratio of polymer (A) to polymer (B) in the multimodal polyethylene composition is between 40:60 and 60:40, more preferably between 43:57 and 55:45, and most preferably between 45:55 and 53:47, regardless of the presence or otherwise of any additional polyethylene fractions.

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions. For example, if a polymer is produced in a sequential multistage process utilising reactors coupled in series with different conditions in each reactor, each of the polymer fractions produced in the different reactors will have its own molecular weight distribution and weight average molecular weight. The molecular weight distribution curve of such a polymer comprises the sum of the individual curves of the fractions, typically yielding a curve for the multimodal polymer having a substantially single peak or two or more distinct maxima. A "substantially single peak" may not follow a Gaussian distribution, may be broader than a Gaussian distribution would indicate, or have a flatter peak than a Gaussian distribution. Some substantially singular peaks may have a tail on either side of the peak. In some embodiments it may be possible to mathematically resolve a "substantially single peak" in a molecular weight distribution curve into two or more components by various methods.

The density of polymer (A) is preferably between 968 and 975 kg/m³, more preferably between 970 and 974 kg/m³.

The density of copolymer (B) is preferably between 930 and 950 kg/m³, more preferably between 935 and 948 kg/m³.

The composition may contain additives such as, by way of example, antioxidants, light stabilizers, acid scavengers, lubricants, antistatic additives, nucleating/clarifying agents, and colourants. An overview of such additives may be found in Plastics Additives Handbook, ed. H. Zweifel, 5th edition, 2001, Hanser Publishers.

The articles to which all aspects of the present invention apply are usually containers such as bottles. A particularly suitable application of the present invention is for white bottles. These are typically used as milk bottles.

The stretch blow moulding process to which the present invention is applicable can either be a one step or a two step process, although the present invention is particularly beneficial for the two step process, in which additional cooling of the preform to ambient temperature and a subsequent reheating step is required before the blow moulding takes place.

The preform, which has an open and a closed end, is prepared by injection moulding. The polyethylene composition is fed to an extruder, plasticized and injected under pressure into an injection mould through an opening, generally referred to as "gate". The polyethylene is typically injected into the injection mould at an injection temperature of at least 220°C.

In the two step process the preform is then cooled to room temperature and transported to the blow moulding machine. The blow moulding step may take place at any subsequent time, and the blow moulding machine may be located remotely from the injection moulding apparatus. The preform is reheated in the blow moulding machine usually using infra-red radiation to a temperature below the melting point of the polyethylene, and it may then be passed through an equilibration zone to allow the heat to disperse evenly through the preform wall.

For the blow-moulding operation, the preform is transferred to the stretch-blowing zone and secured within the blowing mould, which has the same shape as the final container, in such a way that the closed end of the preform points to the inside of the blowing mould. The preform is stretched axially with a centre rod, to bring the wall of the perform into contact with the inside wall of the mould. Pressurized gas is used to blow the preform radially into the blowing mould shape. The blowing of the preform can also be performed in two steps, by first pre-blowing the preform with a lower gas pressure, and then blowing the preform to its final shape with a higher gas pressure.

Following the stretching and blowing, the container is rapidly cooled and removed from the blowing mould.

### EXAMPLES

### Injection moulding

Preforms (25g weight, 2.9mm wall thickness) were made by injection moulding the polyethylene compositions of Examples 1-10 below according to the process described in Example 1 (part 2) of WO 2011057924. In all of the Examples the polyethylene was a monomodal resin having a density of 952 kg/m³ and a melt index MI₂ of 1.9 g/10min. The Examples differ in the additives contained in the composition; these are shown in Table 2 below. The preforms were allowed to cool to ambient temperature, and at a later date were used in the stretch blow-moulding step.

### Stretch blow-moulding

1 litre bottles were blown on SIDEL SB08 blow-moulding equipment at a rate of 1800 bottles/hour, which is a typical rate for industrial processes. Initial heating of the preforms was carried out by infra-red heating in a standard heating process typically used for PET preforms. At the exit of the heating oven, the temperature of the inner and outer surfaces of the preform about half way along its length was measured.

Results are shown in Table 2 below.

**TABLE 2**

| All examples comprised monomodal polyethylene having a density of 952 kg/m³ and a melt index MI₂ of 1.9 g/10min | | | | | | | | |
|---|---|---|---|---|---|---|---|---|
| EXAMPLE | TiO₂ amount (wt%) | Opacifying agent | Agent amount (wt%) | Heating Energy (Wh/bottle) | Outer wall T (°C) | Inner wall T (°C) | ΔT (°C) | Opacity* |
| 1 (comp) | - | - | - | 5.25 | 129 | 119 | 10 | 0 |
| 2 (comp) | 1 | - | - | Not possible | nm | nm | nm | 3 |
| 3 (comp) | 4.5 | - | - | Not possible | nm | nm | nm | 3 |
| 4 | - | SiO₂ | 2 | 5.25 | 142 | 126 | 16 | 1 |
| 5 | - | SiO₂ | 2 | 4.5 | 129 | 121 | 8 | 1 |
| 6 | - | SiO₂ | 2 | 4.35 | 129 | 120 | 9 | 1 |
| 7 | 0.5 | SiO₂ | 2 | 4.4 | 130 | 118 | 12 | 2 |
| 8 (comp) | 2 | SiO₂ | 2 | 4.4 | 129 | 109 | 20 | 3 |
| 9 | - | CaCO₃ | 5 | 4.45 | 128 | 117 | 11 | 2 |
| 10 | - | Al silicate | 5 | 4.5 | 129 | 119 | 10 | 2 |

| | | | | | | | | |
|---|---|---|---|---|---|---|---|---|
| * Opacity scale: nm = not measurable 0 - poor 1 - moderate 2 - good 3 - very good | | | | | | | | |

Control Example 1, which contained neither TiO₂ nor any of the additives of the invention, was subjected to a level of heating energy - 5.25 Watt hours per bottle - which is typically used in this equipment for preheating high density polyethylene preforms. It can be seen that this resulted in an external wall temperature of 129°C and an internal wall temperature of 119°C, a ΔT of 10°C. ΔT is an indication of how evenly the preform has been heated and defines the "processing window". If the external wall temperature is too high, the preform can become too soft or too sticky, which causes problems in the blow-moulding process. If the internal wall temperature is too low, the preform may not be sufficiently plastic to blow mould successfully. Thus it can be seen that a low external wall temperature and in particular a high internal wall temperature, in other words a small ΔT, is desirable.

Comparative Examples 2 and 3 contained TiO₂ only. The amount of TiO₂ typically required to obtain suitably opaque articles is 4.5wt%. It can be seen that with such an amount, and even with as little as 1wt% TiO₂ in Example 3, it is not possible to heat the preform sufficiently. This is because the TiO₂ blocks the infra-red radiation, although it also gives very good opacity.

Examples 4-8 all contain SiO₂. Example 4 shows that with 2wt%, the standard level of heating (5.25 Wh/bottle) actually provides more heat than required, resulting in excessively high temperatures on both the internal and external surfaces. In this case the preform was found to have shrunk due to the excessive heat generated in the heating oven, and it could not be blow-moulded. Examples 5 and 6 show that when the heating level is reduced to as low as 4.35 Wh/bottle, acceptable temperatures and in particular a suitably high internal wall temperature leading to a suitable ΔT can be achieved. This results in an enlarged processing window as possible variations in the heating energy will still allow acceptable internal and external wall temperatures. The lower heating energy also constitutes a very significant 17% reduction in energy requirement compared with the control. Example 5, with the lowest ΔT of 8°C, lower than that of Example 1, indicates the likely optimum heating level.

Examples 4-6 all have moderate opacity. Examples 7 and 8 additionally contain TiO₂ as well as 2 wt% of SiO₂. In Example 7, 0.5wt% of TiO₂ results in a higher external surface temperature and lower internal surface temperature than the TiO₂-free Example 6, resulting in a ΔT of 12°C, while maintaining a low heating energy. The inside temperature is still acceptable for the stretch blow moulding process, but a bottle with better opacity than in examples 4-6 is obtained. With 2wt% TiO₂ as in Example 8, although opacity is good, the internal wall temperature falls to only 109°C, which is excessively low for good stretch blow-moulding.

Examples 9 and 10 show the effects of different additives - calcium carbonate and aluminium silicate. At 5wt%, both give improved opacity compared with the control (Example 1), whilst still having an acceptable internal wall temperature and ΔT.

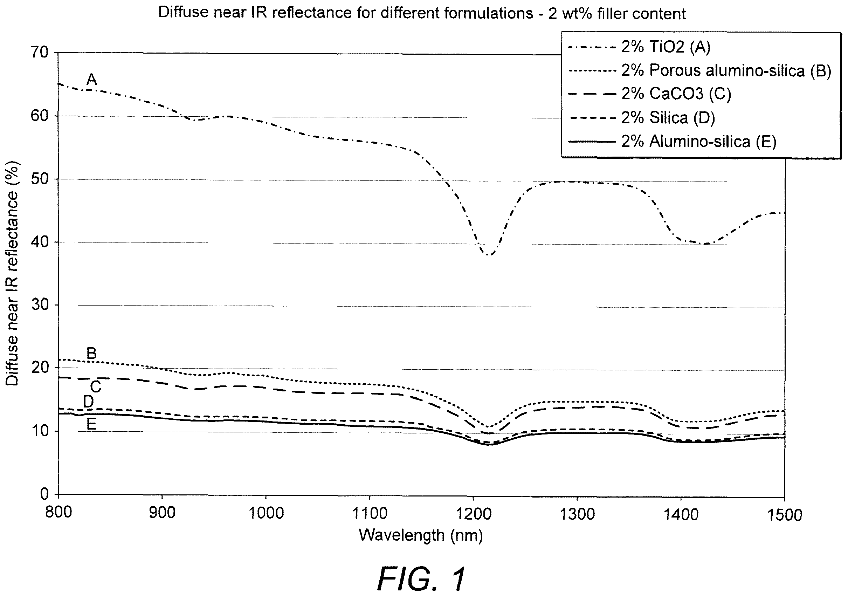

Infra-red reflectivity profiles for compositions containing 2wt% of SiO2, CaCO3 and aluminium silicate (porous and non-porous) are shown in Figure 1. They were determined by recording the diffuse reflectance spectrum of a 400µm thickness pressed film of Eltex® B4020 polyethylene containing 2wt% of the opacifying agent using a Shimadzu spectrometer (Model UV-3100) equipped with an integrating-sphere. This equipment includes two light sources: halogen and deuterium lamps. The background was recorded on a BaSO₄ plate. The spectra were recorded between 800 and 1500nm with a 20nm slit width and a 0.5nm sampling interval.

It can be seen from Fig 1 that the opacifying agents of the invention have much lower reflectivity than TiO₂; the reflectivity at 900nm is no more than 20%, compared with over 60% for TiO₂.

## Claims

1. Use of SiO₂, CaCO₃ or aluminium silicate as a pigment or opacifying agent in a stretch blow-moulded article or preform for making such an article, which article is formed from a composition comprising a polyethylene having a natural density of 948-963 kg/m³ and a melt index MI₂ of 0.2 - 5 g/10min.

2. Use of SiO₂, CaCO₃ or aluminium silicate to increase the heat transfer through a preform heated by infra-red radiation, said preform being formed from a composition comprising a polyethylene having a natural density of 948-963 kg/m³ and a melt index MI₂ of 0.2-5 g/10min.

3. Use according according to claim 1 or 2, wherein the SiO₂, CaCO₃ or aluminium silicate is present in an amount of 0.3 - 30wt%, preferably 0.3-25wt%, more preferably 0.3-15wt%, most preferably 0.3-10wt% and particularly preferably 0.3-7wt%.

4. Use according to any preceding claim, wherein the amount of SiO₂, CaCO₃ or aluminium silicate is 1- 5wt%, preferably 1-3wt%.

5. Use according to any preceding claim, wherein the composition additionally contains up to a total of 1wt%, preferably up to 0.7wt%, of titanium dioxide, zinc oxide, barium sulphate, lithopone or zinc sulphide or a combination thereof.

6. Use according to any preceding claim, wherein the polyethylene has a natural density 950 and 961 kg/m³, preferably between 951 and 960 kg/m³.

7. Use according to any preceding claim, wherein the MI₂ of the polyethylene is 0.3 - 3 g/10min, preferably 0.7 - 2 g/10min.

8. Use according to any preceding claim, wherein the article or preform comprises a single layer.

## Patentansprüche

1. Verwendung von SiO₂, CaCO₃ oder Aluminiumsilikat als Pigment oder Trübungsmittel in einem streckblasgeformten Artikel oder Vorformling zur Herstellung eines derartigen Artikels, wobei der Artikel aus einer Zusammensetzung, die ein Polyethylen mit einer natürlichen Dichte von 948-963 kg/m³ und einem Schmelzindex MI₂ von 0,2-5 g/10 min umfasst, gebildet wird.

2. Verwendung von SiO₂, CaCO₃ oder Aluminiumsilikat zur Verbesserung der Wärmeübertragung durch einen mittels Infrarotstrahlung erhitzten Vorformling, wobei der Vorformling aus einer Zusammensetzung, die ein Polyethylen mit einer natürlichen Dichte von 948-963 kg/m³ und einem Schmelzindex MI₂ von 0,2-5 g/10 min umfasst, gebildet wird.

3. Verwendung nach Anspruch 1 oder 2, wobei das SiO₂, CaCO₃ oder Aluminiumsilikat in einer Menge von 0,3-30 Gew.-%, vorzugsweise 0,3-25 Gew.-%, weiter bevorzugt 0,3-15 Gew.-%, ganz besonders bevorzugt 0,3-10 Gew.-% und speziell bevorzugt 0,3-7 Gew.-% vorliegt.

4. Verwendung nach einem der vorhergehenden Ansprüche, wobei die Menge an SiO₂, CaCO₃ oder Aluminiumsilikat 1-5 Gew.-%, vorzugsweise 1-3 Gew.-%, beträgt.

5. Verwendung nach einem der vorhergehenden Ansprüche, wobei die Zusammensetzung zusätzlich bis zu insgesamt 1 Gew.-%, vorzugsweise bis zu 0,7 Gew.-%, Titandioxid, Zinkoxid, Bariumsulfat, Lithopone oder Zinksulfid oder eine Kombination davon enthält.

6. Verwendung nach einem der vorhergehenden Ansprüche, wobei das Polyethylen eine natürliche Dichte 950 und 961 kg/m³, vorzugsweise zwischen 951 und 960 kg/m³, aufweist.

7. Verwendung nach einem der vorhergehenden Ansprüche, wobei der MI₂ des Polyethylens 0,3-3 g/10 min, vorzugsweise 0,7-2 g/10 min, beträgt.

8. Verwendung nach einem der vorhergehenden Ansprüche, wobei der Artikel bzw. Vorformling eine einzige Schicht umfasst.

## Revendications

1. Utilisation de SiO₂, de CaCO₃ ou de silicate d'aluminium en tant que pigment ou agent opacifiant dans un article moulé par étirage-soufflage ou dans une préforme pour faire un tel article, l'article étant formé à partir d'une composition comprenant un polyéthylène ayant une densité naturelle de 948-963 kg/m³ et un indice de fusion MI₂ de 0,2-5 g/10 min.

2. Utilisation de SiO₂, de CaCO₃ ou de silicate d'aluminium pour augmenter le transfert de chaleur à travers une préforme chauffée par un rayonnement infrarouge, ladite préforme étant formée à partir d'une composition comprenant un polyéthylène ayant une densité naturelle de 948-963 kg/m³ et un indice de fusion MI₂ de 0,2-5 g/10 min.

3. Utilisation selon la revendication 1 ou 2, le SiO₂, le CaCO₃ ou le silicate d'aluminium étant présent en une quantité de 0,3-30% en poids, préférablement de 0,3-25% en poids, plus préférablement de 0,3-15% en poids, le plus préférablement de 0,3-10% en poids et particulièrement préférablement de 0,3-7% en poids.

4. Utilisation selon l'une quelconque des revendications précédentes, la quantité de SiO₂, de CaCO₃ ou de silicate d'aluminium étant de 1-5% en poids, préférablement de 1-3% en poids.

5. Utilisation selon l'une quelconque des revendications précédentes, la composition contenant de plus jusqu'à un total de 1% en poids, préférablement jusqu'à 0,7% en poids, de dioxyde de titane, d'oxyde de zinc, de sulfate de baryum, de lithopone ou de sulfure de zinc ou d'une combinaison correspondante.

6. Utilisation selon l'une quelconque des revendications précédentes, le polyéthylène ayant une densité naturelle 950 et 961 kg/m³, préférablement entre 951 et 960 kg/m³.

7. Utilisation selon l'une quelconque des revendications précédentes, le MI₂ du polyéthylène étant de 0,3-3 g/10 min, préférablement de 0,7-2 g/10 min.

8. Utilisation selon l'une quelconque des revendications précédentes, l'article ou la préforme comprenant une couche unique.
